# EUROPÄISCHE PATENTSCHRIFT

(11) **EP 1 332 468 B1**
(45) Veröffentlichungstag und Bekanntmachung des Hinweises auf die Patenterteilung: **09.02.2005**
(21) Anmeldenummer: 01993048.6
(22) Anmeldetag: 06.11.2001
(51) Int. Cl.: G06K 19/073, H02J 9/06

(54) **VERFAHREN ZUR STEUERUNG DER LADE- UND ENTLADEPHASEN EINES STÜTZKONDENSATORS**
METHOD FOR CONTROLLING THE CHARGING AND DISCHARGING PHASES OF A BACK-UP CAPACITOR
PROCEDE DE COMMANDE DES PHASES DE CHARGE ET DE DECHARGE D'UN CONDENSATEUR DE STOCKAGE D'ENERGIE

(30) Priorität: 06.11.2000 DE 10054970
(43) Veröffentlichungstag der Anmeldung: 06.08.2003
(73) Patentinhaber: Infineon Technologies AG, 81669 München (DE)
(72) Erfinder: TSCHETERNIGG, Siegfried, 86946 Vilgertshofen (DE); WEDEL, Armin, 86415 Mering (DE)
(74) Vertreter: Epping Hermann & Fischer
(86) Internationale Anmeldenummer: PCT/DE2001/004170
(87) Internationale Veröffentlichungsnummer: WO 2002/037637

(56) Entgegenhaltungen:
- EP-A- 1 022 683
- EP-A- 1 098 267
- EP-A- 1 113 386
- DE-A- 19 836 045
- DE-A- 19 850 293
- DE-A- 19 911 673
- FR-A- 2 774 492
- FR-A- 2 776 410

## Beschreibung

Die Erfindung betrifft ein Verfahren zur Steuerung der Ladeund Entladephasen eines Stützkondensators eines Datenträgers mit einer Datenverarbeitungseinheit, wobei der Stützkondensator mit einem Spannungsversorgungseingang der Datenverarbeitungseinheit verbunden ist, mit den Verfahrensschritten:
- Trennen der Datenverarbeitungseinheit und des Stützkondensators von einem Versorgungspotential,
- Durchführen von Rechenoperationen in der Datenverarbeitungseinheit und
- Verbinden des Stützkondensators mit der Versorgungsspannung und dadurch Laden des Stützkondensators.

Einderartiges Verfahren gemäß dem Oberbegriff des Anspruchs 1 ist aus DE-A- 198 50 293 bekannt.

Hintergrund dieses Verfahrens ist die Tatsache, daß Datenverarbeitungseinheiten, die geheime Schlüsseldaten verarbeiten, so ausgelegt werden müssen, daß während einer Berechnung am Stromverbrauch kein Rückschluß auf die Schlüsseldaten gezogen werden kann. Insbesondere soll dadurch verhindert werden, daß die als "Simple Power Analysis" (SPA) und "Differential Power Analysis" (DPA) bekannten Analysemethoden angewandt werden können. Durch die Pufferung der Spannungsversorgung eines Rechenwerkes während eines Berechnungszyklus wird das Stromprofil des Rechenwerkes während der Durchführung kritischer Rechenoperationen verborgen. Allerdings kann man am Entladeniveau des Stützkondensators ablesen, wieviel Aktivität während des Pufferzeitraums in der Datenverarbeitungseinheit war. Es besteht die Gefahr, daß man anhand eines anschließenden Nachladestromes, der abhängig vom vorherigen Entladungsniveau des Stützkondensators ist, Rückschlüsse auf die verarbeiteten geheimen Daten oder gegebenenfalls auf eine proprietäre algorithmische Verarbeitung ziehen kann.

Aufgabe der vorliegenden Erfindung ist es daher, eine Pufferung einer Datenverarbeitungseinheit mit einem Stützkondensator so vorzusehen, daß bei der Nachladung des Stützkondensators keine Rückschlüsse auf den Stromverbrauch während eines Berechnungszyklus gezogen werden können. Außerdem soll eine Schaltungsanordnung zur Durchführung des Verfahrens angegeben werden.

Diese Aufgabe wird bezüglich des Verfahrens durch ein Verfahren der eingangs genannten Art gelöst, das dadurch gekennzeichnet ist, daß vor dem Laden des Stützkondensators eine Entladung des Stützkondensators auf eine vorgegebene Spannung mit einem konstanten Strom erfolgt.

Bezüglich der Schaltungsanordnung wird die Aufgabe durch eine Schaltungsanordnung gelöst mit einem Stützkondensator, der über eine schaltbare Konstantstromquelle entladbar ist, wobei der Stützkondensator mit einem Versorgungspotential verbindbar ist, einem Komparator, dessen erster Eingang mit dem Stützkondensator verbindbar ist, und an dessen zweitem Eingang eine Referenzspannung anliegt, einer Steuereinheit, die mit dem Ausgang des Komparators verbunden ist, wobei durch die Steuereinheit ein Schalter zur Verbindung des Stützkondensators mit dem Versorgungspotential sowie ein Schalter zum Schalten der Konstantstromquelle ansteuerbar sind.

Durch das Entladen des Stützkondensators auf eine vorgegebene Spannung ist die beim Laden des Kondensators aufgenommene Ladung immer die gleiche. Rückschlüsse auf den Ladezustand des Stützkondensators nach einem Berechnungszyklus sind somit nicht mehr möglich.

Besonders vorteilhaft ist es, daß die Entladung des Stützkondensators auf die vorgegebene Spannung mit einem konstanten Strom erfolgt, denn es muß davon ausgegangen werden, daß bei einer Schaltungsanordnung, die das Erreichen der vorgegebenen Spannung detektiert, eine Totzeit vorhanden ist. In dieser Zeit wird der Stützkondensator weiter entladen. Wenn die Entladung nicht mit konstantem Strom erfolgt, ist die Spannung des Stützkondensators nach Ende der Entladephase wieder abhängig von dem Entladeniveau nach Ende der Durchführung der Rechenoperationen, wenn auch in viel kleinerem Maße als bei einem Verfahren bzw. einer Schaltungsanordnung nach dem Stand der Technik. In einer vorteilhaften Ausgestaltung einer Schaltungsanordnung kann die Entladung mit einem konstanten Strom durch eine Stromspiegelschaltung realisiert werden.

Weiterhin ist es vorteilhaft, wenn die Entladung des Stützkondensators über eine Reihenschaltung aus einem Widerstand und einem Transistor erfolgt, weil somit ein Spannungsteiler gebildet ist, der so eingestellt werden kann, daß die zwischen dem Transistor und dem Widerstand abgegriffene Spannung mit der spezifischen Spannung einer Bandap-Referenz verglichen werden kann.

Die Erfindung wird nachfolgend anhand eines Ausführungsbeispieles näher erläutert. Es zeigen:
- Figur 1: eine erste schematische Darstellung einer erfindungsgemäßen Schaltungsanordnung und
- Figur 2: eine zweite, konkretere Ausgestaltung einer erfindungsgemäßen Schaltungsanordnung.

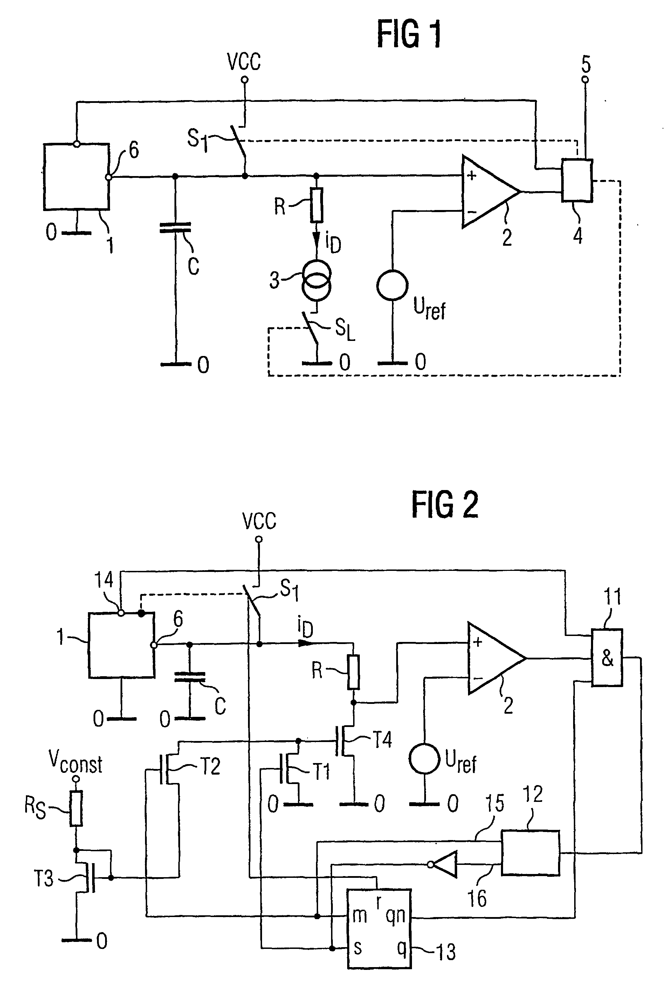

Die Figur 1 zeigt den prinzipiellen Aufbau einer Schaltungsanordnung, mit der das erfindungsgemäße Verfahren durchgeführt werden kann. Eine Datenverarbeitungseinheit 1 eines Datenträgers ist nicht direkt mit einer Versorgungsspannung VCC verbunden, sondern der Versorgungsspannungseingang 6 ist durch einen ersten Schalter S1 von der Versorgungsspannung VCC trennbar. Außerdem ist mit dem Versorgungsspannungseingang 6 ein Stützkondensator C verbunden. Wenn der erste Schalter S1 geöffnet ist, erfolgt daher die Spannungsversorgung der Datenverarbeitungseinheit 1 durch den Stützkondensator C. Die Betriebsdauer, während der die Datenverarbeitungseinheit 1 durch den Stützkondensator C versorgt werden kann, ist abhängig von der Kapazität des Kondensators C sowie dem Stromverbrauch der Datenverarbeitungseinheit 1. Der Zweck dieser Anordnung liegt darin, bei der Durchführung kritischer, d.h. sicherheitsrelevanter Rechenoperationen in der Datenverarbeitungseinheit 1 diese von der Versorgungsspannung VCC zu entkoppeln, um somit zu verhindern, daß anhand des Stromverbrauchs der gesamten Schaltung mit der Datenverarbeitungseinheit 1 Rückschlüsse auf den geheimen Schlüssel gezogen werden können. Wird jedoch nach Ende der Durchführung von Rechenoperationen der Schalter S1 wieder geschlossen, so lädt sich der Kondensator C auf, wobei anhand des Aufladestroms dennoch erkennbar ist, wieviel Ladung dem Kondensator C während der Durchführung von geheimen Rechenoperationen entnommen worden ist.

Um dies zu vermeiden, wird der Kondensator C auf einen bestimmten Spannungswert entladen und erst danach wieder auf Nennspannung aufgeladen. Eine denkbare Möglichkeit dazu wäre, den Kondensator C auf eine durch eine geeignete Schaltung generierte Konstantspannung zu entladen. Dies würde allerdings bedeuten, daß die Konstantspannungsquelle auf eine kapazitive Last umgeschaltet wird. Weil die Konstantspannungsquelle in der Praxis nicht ideal und von der Versorgungsspannung gespeist ist, sieht man auch bei dieser Lösung einen vom Spannungsniveau des Kondensators C abhängigen Versorgungsstrom. Somit ist eine solche Schaltung nicht dazu geeignet, den Stromverbrauch während geheimer Rechenoperationen vollständig zu verbergen.

Gemäß der Erfindung wird der Kondensator C dagegen über eine Konstantstromquelle 3 solange entladen, bis die Spannung über dem Kondensator C einen definierten unteren Grenzwert erreicht. Anschließend wird der Entladepfad durch einen Schalter S2 unterbrochen und der Schalter S1 geschlossen, um so den Kondensator C wieder aufzuladen. Die Detektion des unteren Grenzwertes der Spannung erfolgt über einen Komparator 2, der die Spannung über dem Kondensator C mit einer Referenzspannung U_{ref} vergleicht. Am Ausgang des Komparators 2 ist eine Steuereinheit 4 angeschlossen, die die Steuerung der Schalter S1 und S2 übernimmt. Die Steuereinheit 4 selber wird von der Datenverarbeitungseinheit 1 vor Beginn und nach Ende der Durchführung einer geheimen Rechenoperation angesteuert. Somit wird angezeigt, wann der Schalter S1 geöffnet werden soll, so daß also die Spannungsversorgung der Datenverarbeitungseinheit 1 über den Stützkondensator C erfolgt, und wann ein Entladevorgang, d.h. das Schließen des Schalters S2, durchgeführt werden soll. Das Ende des Entladevorgangs wird selbständig durch den Komparator 2 detektiert und somit der Zeitpunkt zum Öffnen des Schalters S2 und Schließen des Schalters S1 festgelegt. Außerdem ist die Steuereinheit 4 über einen zusätzlichen Eingang 5 ansteuerbar, beispielsweise durch eine zusätzliche Schaltung, die die Anfangsbedingungen festlegt.

Bei Entladen eines Kondensators über einen Widerstand R fällt die Spannung an dem Kondensator ohne zusätzliche Maßnahmen gemäß einer e-Funktion ab. Wenn, wie in der Schaltungsanordnung von Figur 1, der Komparator 2 nun feststellt, daß die untere vorgegebene Spannung des Kondensators erreicht ist, so dauert es noch einige Zeit, bis der Schalter S2 geöffnet ist. Während dieser Zeit wird der Kondensator C weiter entladen. Die Totzeit des Komparators 2 und des Schalters S2 ist zwar immer gleich, da die Spannung an dem Kondensator C aber in einer e-Funktion abfällt, hängt die tatsächliche Endspannung des Kondensators C immer noch von seinem vorherigen Ladungsniveau ab.

Daher erfolgt die Entladung in einer erfindungsgemäßen Ausführung über einen konstanten Strom, was durch die Konstantstromquelle 3 gewährleistet ist, so daß zwar während der Totzeit des Komparators 2 und des Schalters S2 die Spannung über dem Kondensator C immer noch weiter absinkt, deren Endwert aber unabhängig ist von dem vorigen Ladungszustand.

Die Figur 2 zeigt nun eine konkretere Ausgestaltung einer erfindungsgemäßen Schaltungsanordnung mit einer Stromspiegelschaltung zur Realisierung einer Konstantstromquelle und einer Anordnung aus einem UND-Glied 11, einem Zwei-Phasen-Generator 12 sowie einem Flipflop 13 zur Realisierung einer Steuereinheit. Der Spannungsversorgungseingang 6 einer Datenverarbeitungseinheit 1 ist wie im Ausführungsbeispiel von Figur 1 mit der Versorgungsspannung VCC verbunden. Auch ist ein Stützkondensator C vorgesehen, über den die Spannungsversorgung der Datenverarbeitungseinheit 1 sichergestellt wird, wenn der Schalter S1 geöffnet ist. Im Unterschied zu Figur 1 ist der nicht-invertierende Eingang des Komparators 2 nicht direkt mit dem Kondensator C bzw. dem Spannungsversorgungseingang 6 verbunden, sondern es wird die Spannung zwischen einem Widerstand R und einem in Reihe geschalteten Transistor T4 abgegriffen. Die Entladung des Kondensators C erfolgt also über den Widerstand R und den Transistor T4, wobei diese während der Entladung einen Spannungsteiler bilden. Der Spannungsabgriff zwischen dem Widerstand R und dem Transistor T4 ist gewählt, weil der Spannungsvergleich durch den Komparator 2 mit einer Referenzspannung U_{ref} erfolgen soll, und diese Referenzspannung U_{ref} durch eine Band-Gap-Referenz hergestellt werden soll. Die Spannung der Band-Gap-Referenz liegt typischerweise bei 1,203 V, während die Spannung, auf die der Kondensator C entladen werden soll, günstigerweise 2,0 V beträgt. Daher muß der Spannungsteiler aus dem Widerstand R und dem Transistor T4 so vorgesehen werden, daß an dem Widerstand eine Spannung von ca. 0,8 V abfällt. Würde man die Spannung direkt an dem Kondensator C abgreifen, wäre ein Vergleich mit einer Band-Gap-Referenz nicht möglich.

Die Konstantstromquelle wird durch eine Stromspiegelschaltung mit dem Widerstand R_{S} und dem Transistor T3 im Referenzzweig sowie dem Transistor T4 realisiert. Im Referenzzweig ist der Widerstand Rₛ mit dem Transistor T3 in Reihe geschaltet und liegt zwischen einer Konstantspannung Vₖₒₙₛₜ und dem Bezugspotential 0. Durch die Größe des Widerstandes Rₛ und die Konstantspannung Vₖₒₙₛₜ ist somit festgelegt, welcher Strom im Referenzzweig fließt. Dadurch ist auch bestimmt, welcher Strom durch den Transistor T4 fließen kann. Durch den Transistor T1, der zwischen den Steueranschluß des Transistors T4 und das Bezugspotential geschaltet ist, wird der Transistor T4 geschaltet. Durch den Transistor T2, der zwischen den Steueranschluß des Transistors T3 und den Steueranschluß des Transistors T4 geschaltet ist, kann die Stromspiegelung einund ausgeschaltet werden.

Wenn der Kondensator C noch nicht auf seinem unteren Spannungsniveau ist, ist das Vergleichsergebnis des Komparators 2 ein High-Signal. Wenn der Schalter S1 geöffnet ist, wird das Flipflop zurückgesetzt und der negierte Ausgang qn des Flipflop 13 ist HIGH. Wenn nun zusätzlich von der Datenverarbeitungseinheit 1 signalisiert wird, daß die sicherheitsrelevanten Rechenoperationen beendet sind und der Kondensator entladen werden kann, ist der Ausgang 14 der Datenverarbeitungseinheit 1 auf HIGH, und dieses Signal liegt als drittes Eingangssignal an dem UND-Glied 11 an. Dadurch springt der Spannungspegel am Ausgang des UND-Gliedes 11 auf HIGH und es wird in der Folge der Entladevorgang eingeleitet. Über den Zwei-Phasengenerator 12 werden aus dem Ausgangssignal des UND-Gliedes 11 zwei zeitlich verzögerte Signale 16 und 15 generiert. Zunächst wird über das Signal 16 der Transistor T1 geöffnet, so daß der Transistor T4 leitend werden kann. Mit dem zweiten Signal 15 wird der Transistor T2 durchgeschaltet, so daß die Stromspiegelschaltung aktiv wird und den Strom durch den Widerstand Rₛ in den Entladezweig spiegelt. Da der Entladestrom i_{D} konstant ist, fällt an dem Widerstand R eine konstante Spannung ab, die in diesem Ausführungsbeispiel auf 0,8 V eingestellt ist. Bei einer ursprünglichen Spannung von 2,4 V an dem Kondensator C und einem Spannungsabfall von 0,8 V an dem Widerstand R liegt nun an dem nicht-invertierenden Eingang des Komparators 2 eine Spannung von 1,6 V an, während die Referenzspannung U_{ref} bei 1,2 V liegt. Erst bei Entladen des Kondensators auf eine Spannung von 2 V wird die Spannung am nicht-invertierenden Eingang des Komparators 2 kleiner als die Spannung am invertierenden Eingang. In diesem Augenblick fällt das Ausgangssignal des Komparators 2 ab und durch dieses LOW-Signal am Eingang des UND-Gliedes 11 springt auch dessen Ausgang auf LOW. In der Folge wird der Transistor T1 leitend geschaltet, so daß der Entladetransistor T4 sperrt und die Entladung des Kondensators C beendet ist. Nach Schließen des Schalters S1 kann nun der Kondensator C wieder aufgeladen werden.

Selbstverständlich sind für eine derartige Funktion verschiedene Ausgestaltungen einer Schaltungsanordnung möglich, solange aber der Stützkondensator C durch einen konstanten Strom I_{D} entladen wird, sind diese Schaltungen von der Erfindung umfaßt.

## Patentansprüche

1. Verfahren zur Steuerung der Lade- und Entladephasen eines Stützkondensators (C) eines Datenträgers mit einer Datenverarbeitungseinheit (1), wobei der Stützkondensator (C) mit einem Spannungsversorgungseingang (6) der Datenverarbeitungseinheit (1) verbunden ist, mit den Verfahrensschritten:
- Trennen der Datenverarbeitungseinheit (1) und des Stützkondensators (C) von einem Versorgungspotential (VCC),
- Durchführen von Rechenoperationen in der Datenverarbeitungseinheit (1),
- Verbinden des Stützkondensators (C) mit dem Versorgungspotential (VCC) und dadurch Laden des Stützkondensators (C),
**dadurch gekennzeichnet,**
**daß** vor Laden des Stützkondensators (C) eine Entladung des Stützkondensators (C) auf eine vorgegebene Spannung mit einem konstanten Strom (i_{D}) erfolgt.

2. Schaltungsanordnung zur Durchführung des Verfahrens nach Anspruch 1 mit
- einem Stützkondensator (C), der über eine schaltbare Konstantstromquelle (3) entladbar ist, wobei der Stützkondensator (C) mit einem Versorgungspotential (VCC) verbindbar ist,
- einem Komparator (2), dessen erster Eingang mit dem Stützkondensator verbunden ist und an dessen zweitem Eingang eine Referenzspannung (U_{ref}) anliegt,
- einer Steuereinheit (4; 11, 12, 13), die mit dem Ausgang des Komparators (2) verbunden ist, wobei durch die Steuereinheit (4; 11, 12, 13) ein Schalter S1 zur Verbindung des Stützkondensators (C) mit dem Versorgungspotential (VCC) sowie ein Schalter (S2; T4) zum Schalten der Konstantstromquelle (3; RS, T3, T4) ansteuerbar sind.

3. Schaltungsanordnung nach Anspruch 2,
**dadurch gekennzeichnet,**
**daß** die Konstantstromquelle (3) eine Stromspiegelschaltung ist.

4. Schaltungsanordnung nach Anspruch 2 oder 3,
**dadurch gekennzeichnet,**
**daß** die Steuereinheit ein Flipflop (13) und ein UND-Glied (11) aufweist, wobei ein Ausgang (qn) des Flipflop (13) auf einen ersten Eingang des UND-Gliedes geschaltet ist und ein Steuereingang vorgesehen ist, der mit einem zweiten Eingang des UND-Gliedes (11) verbunden ist, und der Ausgang des Komparators (2) mit einem dritten Eingang des UND-Gliedes verbunden ist.

5. Schaltungsanordnung nach Anspruch 2,
**dadurch gekennzeichnet,**
**daß** die Entladung des Stützkondensators (10) über eine Reihenschaltung aus einem Widerstand (R) und einem Transistor (T4) erfolgt, so daß ein Spannungsteiler gebildet ist und die zwischen dem Transistor T4 und dem Widerstand (R) abgegriffene Spannung durch den Komparator (2) mit der Spannung (U_{ref}) einer Band-Gap-Referenz verglichen wird.

## Claims

1. Method for controlling the charging and discharging phases of a backup capacitor (C) for a data storage medium having a data processing unit (1), where the backup capacitor (C) is connected to a voltage supply input (6) on the data processing unit (1), having the following method steps:
- the data processing unit (1) and the backup capacitor (C) are isolated from a supply potential (VCC),
- arithmetic operations are carried out in the data processing unit (1),
- the backup capacitor (C) is connected to the supply potential (VCC), and this charges the backup capacitor (C),
**characterized**
**in that**, before the backup capacitor (C) is charged, the backup capacitor (C) is discharged to a prescribed voltage using a constant current (i_{D}).

2. Circuit arrangement for carrying out the method according to Claim 1, having
- a backup capacitor (C) which can be discharged via a switchable constant current source (3), said backup capacitor (C) being able to be connected to a supply potential (VCC),
- a comparator (2) whose first input is connected to the backup capacitor and whose second input has a reference voltage (U_{ref}) applied to it,
- a control unit (4; 11, 12, 13) which is connected to the output of the comparator (2), said control unit (4; 11, 12, 13) being able to actuate a switch S1 for the purpose of connecting the backup capacitor (C) to the supply potential (VCC) and also a switch (S2; T4) for the purpose of switching the constant current source (3; RS, T3, T4).

3. Circuit arrangement according to Claim 2,
**characterized**
**in that** the constant current source (3) is a current-mirror circuit.

4. Circuit arrangement according to Claim 2 or 3,
**characterized**
**in that** the control unit has a flipflop (13) and an AND gate (11), with one output (qn) of the flipflop (13) being connected to a first input of the AND gate, and a control input being provided which is connected to a second input of the AND gate (11), and the output of the comparator (2) being connected to a third input of the AND gate.

5. Circuit arrangement according to Claim 2,
**characterized**
**in that** the backup capacitor (10) is discharged via a series circuit comprising a resistor (R) and a transistor (T4), so that a voltage divider is formed and the voltage tapped off between the transistor T4 and the resistor (R) is compared with the voltage (U_{ref}) of a bandgap reference by the comparator (2).

## Revendications

1. Procédé de commande de phases de charge et de décharge d'un condensateur (C) de secours d'un support de données ayant une unité (1 ) de traitement de données, et le condensateur (C) de secours étant relié à une entrée (6) d'alimentation en tension de l'unité (1) de traitement de données, comprenant les stades dans lesquels :
- on sépare l'unité (1) de traitement de données et le condensateur (C) de secours d'un potentiel (VCC) d'alimentation,
- on effectue des opérations de calcul dans l'unité (1) de traitement de données,
- on applique le potentiel (VCC) d'alimentation au condensateur (C) de secours et on charge ainsi le condensateur (C) de secours,
**caractérisé**
**en ce qu'**avant de charger le condensateur (C) de secours, on effectue une décharge du condensateur (C) de secours jusqu'à une tension prescrite avec un courant (i_{D}) constant.

2. Montage pour effectuer le procédé suivant la revendication 1, comprenant
- un condensateur (C) de secours, qui peut être déchargé par une source (3) de courant constant pouvant être commutée, un potentiel (VCC) d'alimentation pouvant être appliqué au condensateur (C) de secours,
- un comparateur (2) dont la première entrée est reliée au condensateur de secours et à la deuxième entrée duquel s'applique une tension (U_{ref}) de référence,
- une unité (4 ; 11, 12, 13) de commande, qui est reliée à la sortie du comparateur (2), un interrupteur (S1) de liaison du condensateur (C) de secours au potentiel (VCC) d'alimentation, ainsi qu'un interrupteur (S2 ; T4) de commutation de la source (3 ; RS, T3, T4) de courant constant pouvant être commandés par l'unité (4 ; 11, 12, 13) de commande.

3. Montage suivant la revendication 2,
**caractérisé**
**en ce que** la source (3) de courant constant est un circuit miroir de courant.

4. Montage suivant la revendication 2 ou 3,
**caractérisé**
**en ce que** l'unité de commande comporte une bascule (13) et un élément (11) ET, une sortie (qn) de la bascule (13) étant reliée à une première entrée de l'élément ET, et il est prévu une entrée de commande qui est reliée à une deuxième entrée de l'élément (11) ET, et la sortie du comparateur (2) est reliée à une troisième entrée de l'élément ET.

5. Montage suivant la revendication 2,
**caractérisé**
**en ce que** la décharge du condensateur (10) de secours s'effectue par un circuit série constitué d'une résistance (R) et d'un transistor (T4), de manière à former un diviseur de tension, et la tension prélevée entre le transistor (T4) et la résistance (R) est comparée par le comparateur (2) à la tension (U_{ref}) d'une référence à barrière de potentiel.
